# EUROPÄISCHE PATENTSCHRIFT

(11) **EP 0 797 735 B1**
(45) Veröffentlichungstag und Bekanntmachung des Hinweises auf die Patenterteilung: **13.05.1998**
(21) Anmeldenummer: 95941670.2
(22) Anmeldetag: 05.12.1995
(51) Int. Cl.: F04D 29/20

(54) **LAUFRADBEFESTIGUNG**
IMPELLER FASTENING
FIXATION DE ROTOR

(30) Priorität: 16.12.1994 DE 4444965
(43) Veröffentlichungstag der Anmeldung: 01.10.1997
(73) Patentinhaber: KSB Aktiengesellschaft, 67227 Frankenthal (DE)
(72) Erfinder: RENNEISEN, Armin, D-64331 Weiterstadt (DE); RIEL, Axel, D-67227 Frankenthal (DE); SCHUSTER, Oliver, D-68642 Bürstadt (DE); SCHWAAB, Frank, D-67246 Dirmstein (DE)
(86) Internationale Anmeldenummer: EP9504780
(87) Internationale Veröffentlichungsnummer: WO9618820

(56) Entgegenhaltungen:
- FR-A- 2 298 256
- GB-A- 887 226
- US-A- 2 232 648
- US-A- 2 520 122
- US-A- 2 741 288
- US-A- 4 268 544

## Beschreibung

Die Erfindung betrifft eine Befestigung eines Kreiselpumpenlaufrades gemäß dem Oberbegriff von Anspruch 1.

Gewöhnlich werden Kreiselpumpenlaufräder auf einer Welle dadurch befestigt, daß sie mit ihrer Nabenbohrung auf ein Wellenende aufgeschoben werden und durch eine daran anzubringende Mutter gegen einen Bund der Welle anpreßbar sind. Zur Drehmomentübertragung können noch zusätzliche Bauelemente Verwendung finden. Bei metallischen Bauelementen ist dies eine bewährte und problemlose Befestigungsmöglichkeit. Jedoch bei Kunststofflaufrädern ist diese Befestigungsmöglichkeit unvorteilhaft, da diese Materialien unter Druckbelastungen zum Fließen neigen. Für Kunststofflaufräder ist es durch die US-A-2 232 648 bekannt, in einer metallischen Nabe eine Sackbohrung vorzusehen, in der eine Gewinde angebracht ist, welches auf ein Wellenende aufschraubbar ist. Hier sind aber wieder besondere Sicherungsmaßnahmen mit Hilfe zusätzlicher Elemente erforderlich, um bei einer Drehrichtungsumkehr ein Lösen der Schraubverbindung zu verhindern. Ein im Bereich des Gewindes angeordnetes Dichtelement soll das Gewinde gegen einen Flüssigkeitseintritt sichern.

Durch die US-A-4 268 544 ist es bekannt, Gewinde mit einem Harz zu beschichten, welches die Reibung innerhalb des Gewindes vergrößert. Diese Maßnahme soll ein Lösen der Schraubverbindung verhindern. Sie stellt einen zusätzlichen und sehr aufwendigen Bearbeitungsvorgang dar. Denn mit Hilfe von Dosiereinrichtungen und Heiz- sowie Dosierelementen muß ein Schraubelement behandelt werden, um die notwendige Kunststoffmenge zwecks Sicherungsfunktion aufzutragen.

Der Erfindung liegt daher das Problem zugrunde, bei einem aus Kunststoff bestehenden Kreiselpumpenlaufrad, welches mit einer Nabe zur Kräfteübertragung versehen ist, eine zuverlässige Befestigungsmöglichkeit zu entwickeln. Die Lösung dieses Problems erfolgt mit den Merkmalen des Anspruches 1. Der das Laufradteil bildende Kunststoff dient selbst als Sicherungselement, indem ein Teil des Gewindes mit Kunststoff gefüllt ist. Der im Gewinde angeordnete Kunststoff ist mit dem Kunststoff des Laufradteiles einteilig ausgebildet. Ein in das Gewinde einschraubbares Wellenende verdrängt den in den Gewindegängen teilweise befindlichen Kunststoff und wird davon gleichzeitig in seiner Position gesichert. Bei der Herstellung des auf eine Nabe anzuspritzenden bzw. anzuformenden, aus Kunststoff bestehenden Laufradteiles wird in den Gewindebereich des Nabenteiles ein entsprechender Dorn eingelegt, mit dessen Hilfe der Fluß des Kunststoffes in die Gewindegänge beeinflußt werden kann.

Ausgestaltungen der Erfindung sehen vor, daß der aus Kunststoff bestehende Laufradteil die Aufnahmeöffnung des Nabenteiles auf der zur Saugseite des Laufrades weisenden Seite verschließt und die Gewindegänge teilweise ausfüllt. Mit diesen und den weiteren in den Unteransprüchen beschriebenen Maßnahmen wird sichergestellt, daß ein in das Gewinde des Nabenteiles einschraubbares Wellenende durch den in die Gewindegänge eingelagerten Kunststoff zuverlässig gegen Verdrehung gesichert wird. Hierzu kann zusätzlich in das Gewinde eine Nut eingeschnitten sein, die mit Kunststoff ausgespritzt ist, bzw. das metallische Nabenteil kann mit Verbindungskanälen versehen sein, welche den Kunststoff gezielt an bestimmte Stellen des Gewindes heranführen. Auch kann eine Nut des Wellenendes mit Kunststoff gefüllt werden.

Ein Verfahren zur Herstellung des Kreiselpumpenlaufrades sieht vor, daß bei der Anformung des Laufradteiles an den Nabenteil ein Dorn in die Aufnahmeöffnung des Nabenteiles eingelegt wird. Die Position und die Form des Dornes beeinflußt das Fließverhalten des Kunststoffes, der in das Gewinde der Aufnahmeöffnung einzudringen versucht. In Abhängigkeit von den Kunststoffeigenschaften wird ein Zustrom einer solchen Menge zugelassen, die eine zuverlässige Befestigung und Verdrehsicherung der gefügten Teile ermöglicht. Je nach Art und Ausbildung des Gewindes sowie der zu sichernden Kräfte kann die innerhalb des Gewindes befindliche Menge von einem dünnen Überzug bis zu einer eine Nut füllende Menge reichen.

Ein Ausführungsbeispiel der Erfindung ist in den Zeichnungen dargestellt und wird im folgenden näher beschrieben. Dabei zeigen die
- Fig. 1: einen Schnitt durch ein Pumpengehäuse und die
- Fig. 2: eine vergrößerte Einzelheit.

Innerhalb eines ausgekleideten Gehäuses 1 ist ein Laufrad 2 drehbar angeordnet. In seinem Aufbau besteht das Laufrad 2 aus einem Nabenteil 3 mit einer durchgehenden Aufnahmeöffnung 4 für ein darin einzuschraubendes Wellenende 5. Der Nabenteil verfügt über eine zusätzliche Nabenscheibe 6, die perforiert ausgebildet ist und mit Kunststoffmaterial umspritzt ist, woraus die Laufradbeschaufelung 7 gebildet wird. Die Verwendung einer zusätzlichen Nabenscheibe 6 ist abhängig von den auf das Laufrad einwirkenden Kräften. Sind diese gering, so kann auf die Nabenscheibe 6 verzichtet werden.

Bei der Montage wird der Nabenteil 3 auf das Wellenende 5 geschraubt und stützt sich mit seiner antriebsseitigen Stirnseite über einen Zwischenring 8 an einer nachgeordneten Wellenschulter ab.

Bei der Herstellung der aus Kunststoff bestehenden Laufradbeschaufelung 7 wird die dem Saugbereich 9 zugekehrte Aufnahmeöffnung 4 durch den Kunststoff der Laufradbeschaufelung 7 verschlossen. Während des Formvorganges befindet sich innerhalb der Aufnahmeöffnung 4 ein Dorn. Dessen äußere Abmessungen und Position sind so gewählt, daß eine definierte Kunststoffmenge in denjenigen Gewindebereich fließt bzw. denjenigen Gewindebereich teilweise auffüllt, der für die Verdrehsicherung zwischen Wellenende 5 und Aufnahmeöffnung 4 vorgesehen ist. Die einzuspritzende Kunststoffmenge erlaubt ein Einschrauben des Wellenendes, ohne daß dabei die am Nabenteil 3, 6 anliegende Kunststoffbeschaufelung abgedrückt werden kann. Die zur Sicherung der Verbindung notwendige Kunststoffmenge ist also abhängig von der Härte des Verwendung findenden Kunststoffes, der geometrischen Ausbildung des Gewindes und eventuell zusätzlich angeordneter Nuträume zur Ausfüllung mit lagesichernden Kunststoff.

Die Perforierung 10 der Nabenscheibe 6 dient zur Verbesserung der Verbindung zwischen Kunststoffteil 7 und metallischer Nabenscheibe 6. Durch in dem Nabenteil 3 angeordnete Verbindungskanäle 11 kann beim Herstellungsvorgang der für die Sicherung der Verbindung notwendige Kunststoff an die gewünschte Stelle innerhalb der Aufnahmeöffnung 4 herangeführt werden.

Der die Aufnahmeöffnung 4 laufradseitig verschließende Laufradteil 12 weist auf der zum Saugbereich 9 weisenden Seite einen Zapfen 13 auf. Dieser als Anguß dienende Zapfen kann eine zentrierende Wirkung in denjenigen Fällen übernehmen, in denen das Laufrad 2 mit einer als selbständiges Bauteil ausgebildeten, saugseitigen Deckscheibe 14 versehen ist. Für die Montage eines dann zweiteilig ausgebildeten Laufrades ergibt sich somit eine einfache Zentrierung.

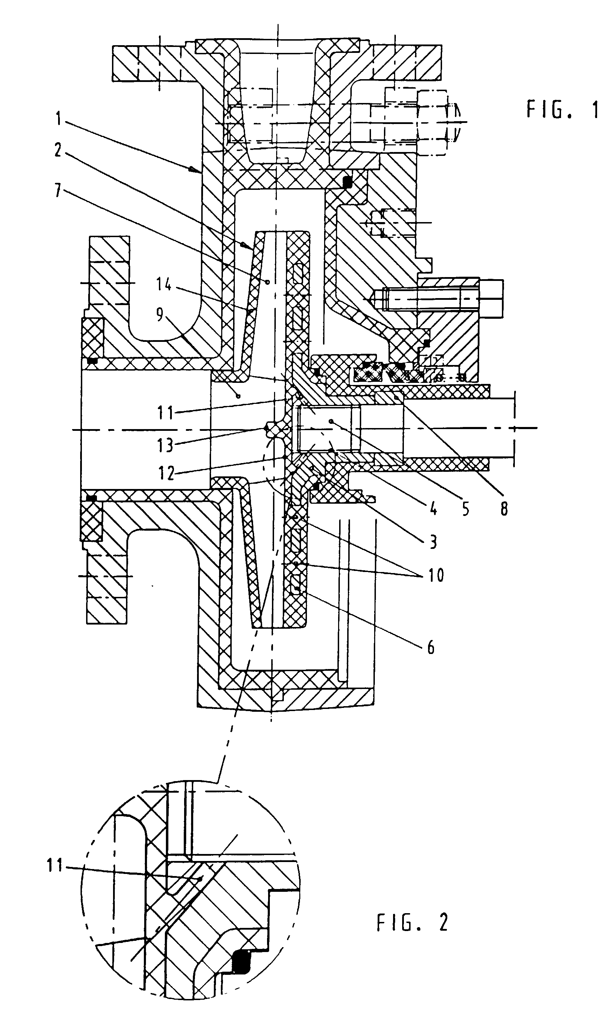

Die Fig. 2 zeigt als vergrößerte Einzelheit einen Ausschnitt von Fig. 1. Darin ist ein Verbindungskanal 11 gezeigt, der in dem Nabenteil 3 angebracht ist. Mit Hilfe des Verbindungskanales 11 kann der Kunststoff des Laufrades 2 an die zu sichernden Bereiche der Aufnahmeöffnung 4 geleitet werden, die mit dem Wellenende 5 zusammenwirken.

## Patentansprüche

1. Kreiselpumpe mit einem Kreiselpumpenlaufrad (2) und einer ein Wellenende (5) aufweisenden Welle, wobei das Kreiselpumpenlaufrad (2) versehen ist mit einem Nabenteil (3), einem daran angeformten Laufradteil (7) aus Kunststoff und einer das Nabenteil (3) durchdringenden zentrischen Aufnahmeöffnung (4) zur kräfteübertragenden Aufnahme eines Wellenendes (5), die Aufnahmeöffnung (4) ein Gewinde aufweist in das ein Wellenende (5) einschraubbar ist, **dadurch gekennzeichnet,** daß ein Teil des Gewindes mit Kunststoff gefüllt ist und daß der im Gewinde angeordnete Kunststoff mit dem Kunststoff des Laufradteiles (7) einteilig ausgebildet ist.

2. Kreiselpumpe nach Anspruch 1, dadurch gekennzeichnet, daß der Kunststoff als Sicherungselement zwischen dem Gewinde des Nabenteiles (3) und des Wellenendes (5) angeordnet ist.

3. Kreiselpumpe nach Anspruch 1 oder 2, dadurch gekennzeichnet, daß der aus Kunststoff bestehende Laufradteil (7) die Aufnahmeöffnung (4) des Nabenteiles (3) im Saugbereich (9) des Laufrades (2) verschließt und teilweise die Gewindegänge füllt.

4. Kreiselpumpe nach Anspruch 1, 2 oder 3, dadurch gekennzeichnet, daß das Nabenteil (3) mit ein oder mehreren Verbindungskanälen (11) für den Kunststoff versehen ist.

5. Kreiselpumpe nach Anspruch 4, dadurch gekennzeichnet, daß der die Aufnahmeöffnung (4) verschließende Laufradteil (12) mit einem vorstehenden Zapfen (13) versehen ist.

6. Kreiselpumpe nach einem der Ansprüche 1 bis 5, dadurch gekennzeichnet, daß mindestens eine Nut ein Gewinde schneidet und mit Kunststoff gefüllt ist.

7. Kreiselpumpe nach Anspruch 6, dadurch gekennzeichnet, daß eine Nut des Wellenendes (5) mit Kunststoff gefüllt ist.

8. Verfahren zur Herstellung eines Kreiselpumpenlaufrades nach einem der Ansprüche 1 bis 7, gekennzeichnet durch einen in den Gewindebereich der Aufnahmeöffnung einlegbaren Dorn, wobei beim Formvorgang des Laufradteiles die Position des Dornes und die äußere Form des Dornes, die in die Gewindegänge fließende Kunststoffmenge regelt.

## Claims

1. Centrifugal pump having a centrifugal pump impeller (2) and a shaft having a shaft end (5), the centrifugal pump impeller (2) being provided with a hub part (3), an impeller part (7) integrally formed thereon and made from plastic, and a central receiving opening (4) which penetrates the hub part (3) and serves to receive a shaft end (5) in a force-transmitting fashion, the receiving opening (4) having a thread into which a shaft end (5) can be screwed, characterized in that a part of the thread is filled with plastic, and in that the plastic arranged in the thread is constructed in one piece with the plastic of the impeller part (7).

2. Centrifugal pump according to Claim 1, characterized in that the plastic is arranged as a locking element between the thread of the hub part (3) and the shaft end (5).

3. Centrifugal pump according to Claim 1 or 2, characterized in that the impeller part (7) consisting of plastic seals the receiving opening (4) of the hub part (3) in the suction region (9) of the impeller (2) and partly fills the threads.

4. Centrifugal pump according to Claim 1, 2 or 3, characterized in that the hub part (3) is provided with one or more connecting channels (11) for the plastic.

5. Centrifugal pump according to Claim 4, characterized in that the impeller part (12) sealing the receiving opening (4) is provided with a projecting pin (13).

6. Centrifugal pump according to one of Claims 1 to 5, characterized in that at least one groove cuts a thread and is filled with plastic.

7. Centrifugal pump according to Claim 6, characterized in that one groove of the shaft end (5) is filled with plastic.

8. Method for producing a centrifugal pump impeller according to one of Claims 1 to 7, characterized by a mandrel which can be inserted in the thread region of the receiving opening, the position of the mandrel and the external shape of the mandrel controlling the quantity of plastic flowing into the threads during the shaping operation of the impeller part.

## Revendications

1. Pompe centrifuge avec une roue mobile de pompe centrifuge (2) et un arbre présentant un bout d'arbre (5), dans laquelle la roue mobile de pompe centrifuge (2) est pourvue d'une partie formant moyeu (3), d'une partie formant roue mobile (7) en matière plastique formée sur celle-ci et d'une ouverture centrale de logement (4) traversant la partie formant moyeu (3) pour le logement, avec transmission des efforts, d'un bout d'arbre (5), l'ouverture de logement (4) présente un filet dans lequel un bout d'arbre (5) peut être vissé, caractérisée en ce qu'une partie du filet est remplie de matière plastique et en ce que la matière plastique disposée dans le filet ne forme qu'une seule pièce avec la matière plastique de la partie formant roue mobile (7).

2. Pompe centrifuge suivant la revendication 1, caractérisée en ce que la matière plastique est disposée en guise d'élément de sécurité entre le filet de la partie formant moyeu (3) et celui du bout d'arbre (5).

3. Pompe centrifuge suivant la revendication 1 ou 2, caractérisée en ce que la partie formant roue mobile (7) se composant de matière plastique obture l'ouverture de logement (4) de la partie formant moyeu (3) dans la région d'aspiration (9) de la roue mobile (2) et remplit en partie les pas de vis.

4. Pompe centrifuge suivant la revendication 1, 2 ou 3, caractérisée en ce que la partie formant moyeu (3) est pourvue d'un ou de plusieurs canaux de liaison (11) pour la matière plastique.

5. Pompe centrifuge suivant la revendication 4, caractérisée en ce que la partie formant roue mobile (12) obturant l'ouverture de logement (4) est pourvue d'un tourillon en saillie (13).

6. Pompe centrifuge suivant l'une quelconque des revendications 1 à 5, caractérisée en ce qu'au moins une rainure coupe un filet et est remplie de matière plastique.

7. Pompe centrifuge suivant la revendication 6, caractérisée en ce qu'une rainure du bout d'arbre (5) est remplie de matière plastique.

8. Procédé pour la fabrication d'une roue mobile de pompe centrifuge suivant l'une quelconque des revendications 1 à 7, caractérisé par un mandrin insérable dans la région du filet de l'ouverture de logement, dans lequel, lors de l'opération de formage de la partie formant roue mobile, la position du mandrin et la forme extérieure du mandrin règlent le débit de matière plastique coulant dans les pas de vis.
